## Europäisches Patentamt

## European Patent Office

## Office européen des brevets

(11) Veröffentlichungsnummer: **0 009 196**
**A1**

## EUROPÄISCHE PATENTANMELDUNG

(21) Anmeldenummer: 79103378.0

(22) Anmeldetag: 10.09.79

(51) Int. Cl.³: **H 02 K 9/19**, F 16 C 17/26,
F 16 L 27/08

(30) Priorität: 21.09.78 DE 2841163

(43) Veröffentlichungstag der Anmeldung: 02.04.80
Patentblatt 80/7

(71) Anmelder: **SIEMENS AKTIENGESELLSCHAFT Berlin und München, Postfach 22 02 61, D-8000 München 22 (DE)**

(72) Erfinder: **Müller, Otto, Eichenring 2, D-8521 Effeltrich (DE)**
Erfinder: **Kullmann, Dieter, Nürnberger Strasse 10, D-8506 Langenzenn (DE)**
Erfinder: **Weghaupt, Erich, Rathenau Strasse 10, D-4330 Mülheim (DE)**

(84) Benannte Vertragsstaaten: **CH DE FR GB**

(54) Elektrische Maschine mit einem Läufer mit supraleitender Erregerwicklung.

(57) Die Erfindung betrifft eine elektrische Maschine mit einem Läufer in einem ortsfesten Maschinengehäuse, der eine supraleitende Erregerwicklung und ein zylindrisches Wellenendstück enthält. Um das Wellenendstück ist ein nicht-rotierendes Anschlußkopfteil angeordnet. Zwischen diesen Bauteilen sind ein Lager und eine Dichtungsvorrichtung vorgesehen und wird ein Kühlmittel übergeleitet. Der Läufer einer solchen Maschine führt axiale und radiale Schwingungen aus. Ist der Anschlußkopf starr mit dem Maschinengehäuse verbunden, muß die Dichtungsvorrichtung ein entsprechendes Spiel ermöglichen. Dies führt jedoch zu Abdichtungsschwierigkeiten. Die Erfindung sieht deshalb ein Lager (22; 25) mit so geringem radialen Spiel vor, daß das Anschlußkopfteil (2) den radialen Auslenkungen des Wellenendstückes (3) aus dessen Sollage bezüglich einer Rotationsachse (4) folgt. Die Dichtungsvorrichtung (29; 30) kann dann vorteilhaft eine Ferrofluidikdichtung (50 bis 52) sein. Als Lager (22; 25) kommt insbesondere ein Gleitlager in Frage. Entsprechend gestaltete Anschlußkopfteile können für supraleitende Turbogeneratoren vorgesehen werden.

ACTORUM AG

SIEMENS AKTIENGESELLSCHAFT    Unser Zeichen
Berlin und München           VPA 78 P 7 5 4 4 EUR

Elektrische Maschine mit einem Läufer mit supraleitender Erregerwicklung

Die Erfindung bezieht sich auf eine elektrische Maschine
mit einem Läufer, der in einem ortsfesten Maschinengehäuse drehbar gelagert ist und eine tiefzukühlende,
supraleitende Erregerwicklung enthält und dessen
Läuferkörper an einer Seite als zylindrisches Wellenendstück gestaltet ist. Um das Wellenendstück ist ein
nicht-rotierendes Teil eines Anschlußkopfes angeordnet,
wobei zwischen dem Wellenendstück und dem Anschlußkopfteil mindestens ein Lager und mindestens eine
Dichtungsvorrichtung vorgesehen sind und eine Überleitung eines Kühlmittels erfolgt.

Zur Kühlung einer tiefzukühlenden, supraleitenden
Wicklung im Läufer einer elektrischen Maschine, beispielsweise eines Turbogenerators, müssen Vorrichtungen zur Überleitung eines hierfür geeigneten

Slm 2 Hag / 19.9.1978

Kühlmittels, insbesondere von flüssigem oder gasförmigem Helium, zwischen rotierenden und nicht-
rotierenden Maschinenteilen vorgesehen sein. Derartige Überleitungsvorrichtungen, die auch als
Kupplungen bezeichnet werden, befinden sich im
allgemeinen an einem Anschlußkopf auf der den
Antriebseinrichtungen der Maschine gegenüberliegenden Stirnseite des Läufers. Über diese Kupplungen
wird das Kühlmittel in den Läufer eingeleitet bzw.
aus diesem wieder abgeleitet. Die Gestaltung dieser
Kupplung ist vor allem im Hinblick auf möglichst
geringe thermische Verluste des Kühlmittelkreislaufes für die Erregerwicklung und im Hinblick
auf kleine Leckraten des kalten Kühlmittels besonders schwierig. Die Kupplungen müssen deshalb
mit rotierenden Dichtungen versehen sein, die das
Kühlmittel, insbesondere das flücsige Helium, einerseits gegen den Außenraum gut abdichten und die
andererseits innerhalb des rotierenden Systems
die Eingangs- von der Ausgangsseite trennen.

Eine Maschine mit einem solchen Anschlußkopf ist
beispielsweise aus "Advances in Cryogenic Engineering"
Vol. 18, 1973, Seiten 372 bis 381 bekannt. Diese
Maschine enthält einen Läufer, dessen Läuferkörper
auf der antriebsabgewandten Seite in ein hohlzylindrisches Wellenendstück übergeht, das in einen
Anschlußkopf hineinragt. Das Wellenendstück enthält
ein zentrales Helium-Zuführungsrohr, das von zwei
weiteren Rohren konzentrisch umgeben ist, zwischen
denen ein Ringkanal zur Rückführung des Heliums
aus dem Läufer ausgebildet ist. Das Wellenendstück
ist an seiner Stirnseite über ein Lager mit dem
Gehäuse des Anschlußkopfes verbunden. Der Anschlußkopf ist starr an dem den Läufer umgebenden Maschinengehäuse befestigt.

Der Läufer dieser Maschine führt sowohl axiale als auch radiale Schwingungen aus, deren Amplituden beim Durchfahren von kritischen Drehzahlen, beispielsweise in der Anlaufphase der Maschine oder in einem Störungsfall, mehrere 100 /um betragen können. Die Lager des Motors, über die der Läufer innerhalb des ortsfesten Maschinengehäuses und das Wellenendstück in dem Anschlußkopfgehäuse gehalten werden, müssen deshalb ein entsprechendes Spiel haben. Auch bei der Konstruktion der am Anschlußkopf zwischen den rotierenden und feststehenden Teilen erforderlichen Dichtungen muß dieses Spiel berücksichtigt werden. Es sind deshalb entsprechend große Kühlmittelleckraten an diesen Dichtungen ohne besonderen konstruktiven Aufwand nicht zu vermeiden.

Weitere Abdichtungsschwierigkeiten ergeben sich, wenn an dem Anschlußkopf auch       noch eine Pumpe zum Evakuieren des Läuferinnenraumes angeschlossen werden soll. Eine solche Evakuierung ist erforderlich, um ein hohes Isoliervakuum zwischen warmen und kalten Teilen des Läufers über lange Betriebszeiten aufrechterhalten zu können. Aufgrund dieser Forderung muß am Anschlußkopf zwischen einem feststehenden und einem rotierenden Evakuierungsleitungsteil mindestens eine Dichtungsvorrichtung vorgesehen sein, die einen hohen Druckunterschied abzudichten vermag. Derartige Dichtungen sind jedoch aufgrund der Schwingungen des Läufers und somit seines Wellenenstückes am Anschlußkopf nur schwer herzustellen.

Aufgabe der vorliegenden Erfindung ist es deshalb, den Anschlußkopf einer solchen Maschine so zu gestalten, daß er mit Dichtungsvorrichtungen versehen werden kann, bei denen die genannten Schwierigkeiten zumindest weitgehend nicht auftreten.

Diese Aufgabe wird für die elektrische Maschine der eingangs genannten Art erfindungsgemäß dadurch gelöst, daß ein Lager mit so geringem radialen Spiel vorgesehen ist, daß das Anschlußkopfteil den radialen Auslenkungen des Wellenendstücks aus dessen Sollage bezüglich einer Rotationsachse folgt.

Die Erfindung geht dabei von der Überlegung aus, daß in radialer Richtung konstante und somit sehr kleine Spaltweiten der Dichtungsvorrichtungen zwischen Teilen des Anschlußkopfes und des Wellenendstückes dadurch gewährleistet werden können, daß zumindest die das Wellenstück unmittelbar umgebenden, nichtrotierenden Teile des Anschlußkopfes die Schwingungen des Läufers in radialer Richtung mit auszuführen in der Lage sind. Dies kann ohne weiteres durch entsprechende Läger mit geringen radialen Toleranzen erreicht werden. Das Anschlußkopfteil ist dann nicht mehr starr mit dem ortsfesten Maschinengehäuse zu verbinden, sondern stützt sich davon unabhängig über diese Läger an dem Wellenendstück ab.

Die Vorteile dieser Gestaltung der elektrischen Maschine bestehen also insbesondere darin, daß Dichtungen mit praktisch konstanten, verhältnismäßig kleinen Dichtungsspaltweiten verwendet werden können. Es lassen sich so die Abdichtungseigenschaften dieser Dichtungen auf verhältnismäßig einfache Weise verbessern..

Gemäß einer Weiterbildung der Maschine nach der Erfindung kann das Wellenendstück mit einem zentral angeordneten Evakuierungsrohr versehen sein. An dem Anschlußkopfteil muß deshalb eine geeignete Kupplung zwischen dem Evakuierungsrohr und einer nicht-rotierenden Evakuierungsleitung, an die eine externe Pumpe angeschlossen werden kann, vorgesehen sein. An die Dichtungsvorrichtung einer solchen Kupplung werden besonders hohe Anforderungen bezüglich ihrer Abdichtungseigenschaften gestellt. Da sich bei der Maschine gemäß der Erfindung sehr kleine Dichtungsspaltweiten vorsehen lassen, können diese Anforderungen erfüllt werden. Aufgrund der zentralen Anordnung des Evakuierungsrohres wird darüber hinaus vorteilhaft nur eine einzige derartige Dichtungsvorrichtung für die Kupplung erforderlich.

Die Dichtungsvorrichtung kann insbesondere eine Ferrofluidikdichtung sein. Mit solchen Dichtungen können gegebenenfalls auch relative Verschiebungen in axialer Richtung zwischen rotierenden und nicht-rotierenden Teilen, wie sie beispielsweise aufgrund der Abkühlung des Läufers durch das Kühlmittel auftreten, ausgeglichen werden, ohne daß ihre Abdichtungseigenschaften beeinträchtigt werden.

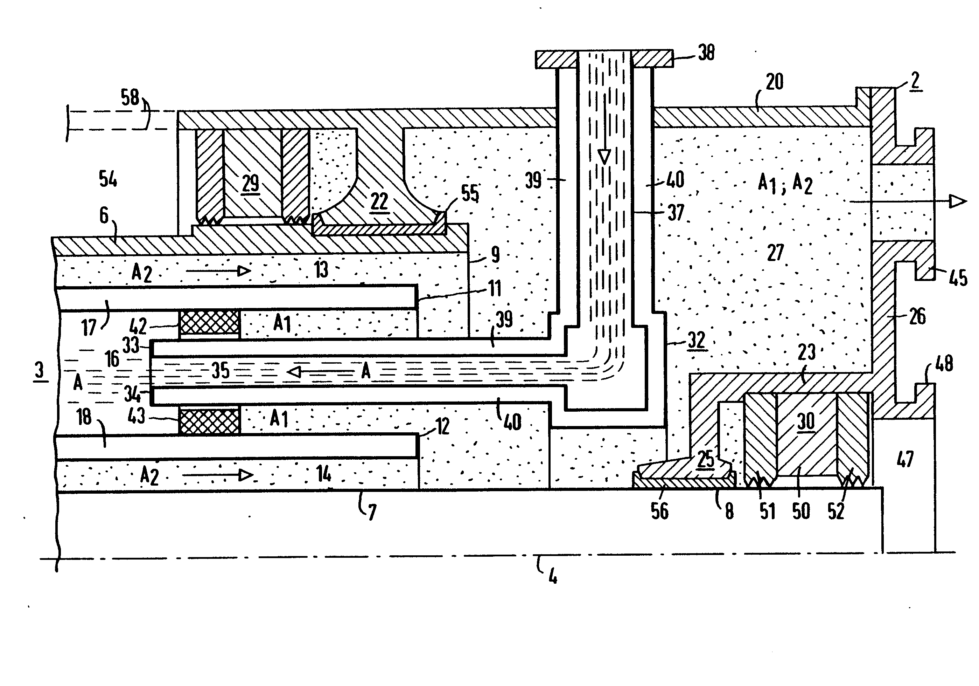

Zur weiteren Erläuterung der Erfindung und deren in den Unteransprüchen gekennzeichneten Weiterbildungen wird auf die Zeichnung Bezug genommen, in der als Ausführungsbeispiel die obere Hälfte eines Anschlußkopfteiles und Wellenendstückes einer Maschine gemäß der Erfindung schematisch veranschaulicht ist.

In ein in der Figur im Längsschnitt dargestelltes Anschlußkopfteil 2 einer Maschine ragt ein seitliches Endstück 3 der Welle eines um eine Rotationsachse 4 drehbar gelagerten Läufers. Diese in der Figur nicht näher ausgeführte Maschine kann insbesondere ein Turbogenerator mit einem Läufer sein, der eine tiefzukühlende, supraleitende Erregerwicklung enthält und von mindestens einem mitrotierenden, zu kühlenden Dämpferschild umgeben ist. Zur Reduzierung der Wärmeeinleitung in die tiefgekühlte Wicklung ist diese ferner von Vakuumräumen umgeben. Hierzu ist der gesamte Läufer von einem mitrotierenden Vakuumgehäuse umschlossen (vgl. DE-OS 23 39 772 und "Siemens Forschungs- und Entwicklungsberichte", Band 5, (1976) Nr. 1, Seiten 10 bis 16). Der Läufer kann aber auch in einem Vakuumraum rotieren.

Das Wellenendstück 3 ist starr mit dem in der Figur nicht gezeigten Läufer verbunden und befindet sich im allgemeinen auf der Seite der Maschine, die der Antriebsseite gegenüberliegt. Das Wellenendstück enthält einen äußeren Hohlzylinder 6 auf Raumtemperatur, der konzentrisch einen inneren Hohlzylinder 7 umschließt, dessen Endstück 8 aus der offenen Stirnseite 9 des äußeren Hohlzylinders ein vorbestimmtes Stück weit vorsteht. Zwischen dem äußeren Hohlzylinder 6 und dem inneren Hohlzylinder 7 sind konzentrisch zwei Doppelrohre 11 und 12 so angeordnet, daß zwischen dem äußeren Doppelrohr 11 und dem äußeren Hohlzylinder 6 ein äußerer Ringkanal 13 und zwischen dem inneren Doppelrohr 12 und dem inneren Hohlzylinder 7 ein innerer Ringkanal 14 ausgebildet sind. Von den beiden Doppelrohren 11 und 12 ist ein Ringraum 16 begrenzt. Die beiden Doppelrohre bestehen jeweils aus zwei konzentrisch zueinander angeordneten Hohlzylindern, die an ihrer Stirnseite untereinander vakuumfest abgeschlossen sind. Die so zwischen den beiden Hohlzylindern jedes Doppelrohres ausgebildeten Innenräume 17 bzw. 18 sind evakuiert.

0009196

Das nicht-rotierende Anschlußkopfteil 2 enthält ein hohlzylindrisches Außengehäuse 20, welches das Ende des rotierenden äußeren Hohlzylinders 6 des Wellenendstückes 3 ein Stück weit in axialer Richtung umschließt und sich über ein Hauptlager 22 an diesem Hohlzylinder 6 abstützt. Ferner enthält das Anschlußkopfteil 2 ein konzentrisch das Endstück 8 des inneren, rotierenden Hohlzylinders 7 des Wellenendstückes 3 umgebendes inneres, hohlzylindrisches Gehäuseteil 23, das sich über ein Nebenlager 25 an dem Endstück 8 abstützt. Dieses Gehäuseteil 23 ist über ein Stirnteil 26 mit dem Außengehäuse 20 starr verbunden. Diese Teile 20, 23, 26 des Anschlußkopfteiles 2 begrenzen einen im wesentlichen vor der Stirnseite 9 des äußeren Hohlzylinders 6 des Wellenendstückes 3 liegenden Innenraum 27 innerhalb des Anschlußkopfteiles 2. Zur Abdichtung dieses Innenraumes 27 ist parallel zu dem Lager 22 zwischen dem nicht-rotierenden Außengehäuse 20 und den rotierenden äußeren Hohlzylinder 6 eine Dichtungsvorrichtung 29 vorgesehen. In entsprechender Weise ist auch das innere Gehäuseteil 23 gegenüber dem Endstück 8 des inneren Hohlzylinders 7 mittels einer Dichtungsvorrichtung 30 abgedichtet.

Gemäß der Erfindung ist das Anschlußkopfteil 2 mit dem von ihm umschlossenen Wellenendstück 3 so verbunden, daß es den Auslenkungen des Läufers und somit dessen Wellenendstückes 3 in radialer Richtung aus der zentrischen Sollage bezüglich der Rotationsachse 4 ohne wesentliches Spiel folgt. Dies läßt sich durch eine entsprechende Gestaltung des Hauptlagers 22 zwischen dem äußeren Hohlzylinder 6 und dem Außengehäuse 20 sowie des Nebenlagers 25 zwischen dem Endstück 8 des inneren Hohlzylinders 7 und dem inneren Gehäuseteil 23 gewährleisten. Geeignet sind Läger mit nur sehr geringen Toleranzen in radialer Richtung. Solche Läger können beispielsweise Gleitläger sein.

An dem Anschlußkopfteil 2 ist die Zu- und Abführung des zur Kühlung der supraleitenden Erregerwicklung erforderlichen Kühlmittels, das im allgemeinen Helium ist, in bzw. aus dem Wellenendstück 3 des Läufers vorgesehen. Für eine Einspeisung von flüssigem Helium A in den Ringraum 16 zwischen den Doppelrohren 11 und 12 dient eine Zuleitungsvorrichtung 32. Diese Vorrichtung enthält zwei in den Ringraum 16 hineinragende, konzentrisch zur Rotationsachse 4 angeordnete Doppelrohrstücke 33 und 34, zwischen denen ein ringförmiger Zuführungskanal 35 ausgebildet ist. Dieser achsenparallel verlaufende Zuführungskanal ist an seinem in dem Innenraum 27 des Anschlußkopfteiles 2 liegenden Ende mit einer oder auch mehreren radial verlaufenden Zuführungsleitungen 37 verbunden. Diese Zuführungsleitung ragt aus dem mit einer entsprechenden Durchführung versehenen Außengehäuse 20 des Anschlußkopfteiles 2 hinaus und ist mit einem Anschlußflansch 38 versehen, an den mittels einer flexiblen, in der Figur nicht dargestellten Verbindungsleitung eine das flüssige Helium A liefernde Kälteeinrichtung angeschlossen werden kann. Zur Reduzierung der Wärmeeinleitung auf das flüssige Helium A sind alle heliumführenden Teile der Zuführungsvorrichtung 32 doppelwandig ausgeführt, wobei zwischen jeweils benachbarten Wänden evakuierbare Räume 39, 40 ausgebildet sind.

Um ein direktes Zurückfließen des in den Ringraum 16 eingespeisten flüssigen Heliums A in den Innenraum 27 des Anschlußkopfteiles 2 zu verhindern, ist zwischen den Rohren 11 und 33 sowie zwischen den Rohren 12 und 34 jeweils mindestens eine ringförmige Dichtungsvorrichtung 42 bzw. 43 vorgesehen. Diese Dichtungsvorrichtungen können beispielsweise Labyrinthdichtungen oder Lippendichtungen sein.

Auf diese Weise gelangt nur ein geringer, mit $A_1$ bezeichneter Anteil des Heliums A aufgrund von Leckagen an diesen Dichtungsvorrichtungen vorbei in den Innenraum 27 des Anschlußkopfteiles 2.

In diesen Innenraum 27 wird darüber hinaus das in dem Läufer der Maschine erwärmte, mit $A_2$ bezeichnete Helium über die Ringkanäle 13 und 14 eingespeist, wo es sich mit dem Helium $A_1$ vermischt. Die Abführung dieses erwärmten Heliums $A_1$, $A_2$ aus dem Innenraum 27 erfolgt an einem Flansch 45 an dem Stirnteil 26 des Anschlußkopfteiles 2. An diesen Flansch ist flexibel eine in der Figur nicht dargestellte und mit der Kälteeinrichtung verbundene Rückführungsleitung angeschlossen.

Bei der Maschine gemäß dem Ausführungsbeispiel ist angenommen, daß die zur thermischen Isolation der kalten Teile des Läufers, insbesondere der supraleitenden Erregerwicklung, erforderlichen Vakua durch ständiges Abpumpen entsprechender Vakuumräume aufrechterhalten werden. Hierzu ist vorteilhaft der innere Hohlzylinder 7 des Wellenendstückes 3 als mitrotierendes Evakuierungsrohr vorgesehen. Das Endstück 8 dieses Hohlzylinders mündet deshalb in einen achsnahen Teilraum 47 des Anschlußkopfteiles 2, der von dem inneren Gehäuseteil 23, dem Stirnteil 26 und dem Nebenlager 25 begrenzt ist. Zur Evakuierung dieses Teilraumes ist das Stirnteil 26 mit einem Anschlußflansch 48 versehen, an den flexibel eine externe Evakuierungsvorrichtung angeschlossen werden kann. Die zwischen dem hohlzylindrischen Gehäuseteil 23 und dem Endstück 8 des Evakuierungsrohres 7 befindliche Dichtungsvorrichtung 30 dient dabei zur vakuumfesten Abdichtung des Teilraumes 47 gegenüber dem Innenraum 27 des Anschlußkopfteiles 2. An diese Dichtungsvorrichtung werden hohe Anforderungen gestellt, da der Druckunterschied zwischen den beiden Räumen 27 und 47 sehr groß sein soll und beispielsweise $10^{-4}$ Pa betragen kann. Da gemäß der Erfindung der Abstand zwischen dem inneren hohlzylindrischen Gehäuseteil 23 und dem Endstück 8 aufgrund der besonderen Lagerung des Anschlußkopfteiles 2 auch bei Auslenkungen des Wellenendstückes 3 praktisch unverändert bleibt, können mit einer Ferrofluidikdichtung diese Anforderungen erfüllt werden. Die Dichtung enthält einen das Endstück 8 des Evakuierungsrohres 7 in einem vorbestimmten Abstand umschließenden, an dem Gehäuseteil 23 befestigten Ringmagneten 50, der an seinen beiden gegenüberliegenden Stirnseiten mit ringscheibenförmigen Polschuhen 51 und 52 versehen ist. Die Polschuhe sind an ihrer dem Endstück 8 zugewandten Seite zahnartig gestaltet, wobei zwischen ihnen und dem Außenmantel des Endstückes ein äußerst geringer Spalt eingehalten werden kann. Dieser Spalt ist mit einer ferromagnetischen Sperrflüssigkeit ausgefüllt. Entsprechende Dichtungen sind beispielsweise aus der DE-OS 2 034 213 bekannt. Aufgrund der bei der Lagerung des Anschlußkopfteiles gemäß der Erfindung einzuhaltenden, äußerst geringen Spaltweite können die auf die Sperrflüssigkeit einwirkenden Haltekräfte ausreichend groß gemacht werden, um ein Absaugen der Sperrflüssigkeit in den Teilraum 47 auszuschließen. Die Abdichtungseigenschaften einer solchen Dichtung werden auch dann nicht beeinträchtigt, wenn sich das Wellenendstück 3 bei einer Abkühlung durch das kryogene Medium in axialer Richtung zusammenzieht.

Gemäß dem Ausführungsbeispiel ist ferner als Dichtungsvorrichtung 29 zwischen dem Außengehäuse 20 des Anschlußkopfteiles 2 und dem äußeren Hohlzylinder 6 des Wellenendstückes 3 eine weitere Ferrofluidikdichtung vorgesehen, um ein Entweichen des in dem Innenraum 27 des Anschlußkopfteiles 2 vorhandenen warmen Heliums $A_1$, $A_2$ in einen den Hohlzylinder 6 umgebenden Außenraum 54 zu verhindern. Eine solche Dichtung kann insbesondere dann von Vorteil sein, wenn in diesem Außenraum ebenfalls ein großer Unterdruck herrschen soll, um so eine zu starke Wärmeeinleitung in das in dem äußeren Ringkanal 13 geführte Helium $A_2$ zu verhindern.

Gemäß dem Ausführungsbeispiel wird jedoch angenommen, daß sich der äußere Hohlzylinder 6 auf Raumtemperatur und unter Normaldruck befinden soll und zugleich das äußere Vakuumgehäuse des Wellenendstückes 3 ist. Dann herrschen zu beiden Seiten der Dichtungsvorrichtung 29 nicht die extremen Druckunterschiede wie bei der Ferrofluidikdichtung 30. Die Anforderungen bezüglich der Abdichtungseigenschaften der Dichtungsvorrichtung 29 sind somit geringer, und es kann deshalb auch eine andere Dichtungsvorrichtung, beispielsweise eine Labyrinthdichtung oder eine Lippendichtung vorgesehen werden. Gegebenenfalls kann auch auf eine solche Dichtung überhaupt verzichtet werden, wenn das Hauptlager 22 schon von sich ausreichende Abdichtungseigenschaften hat.

Gemäß dem in der Figur dargestellten Ausführungsbeispiel wird eine Verschiebung des gesamten Anschlußkopfteiles 2 in axialer Richtung auf dem Wellenendstück 3 im wesentlichen durch eine besondere Gestaltung des Hauptlagers 22 ausgeschlossen. Hierzu ist dieses Lager an seinem dem äußeren Hohlzylinder 6 zugewandten Ende mit einer hohlzylindrischen Lagerschale 55 versehen, die in einer entsprechenden Nut in der äußeren Mantelfläche des Hohlzylinders 6 läuft.

Soll in entsprechender Weise auch eine Lagerschale 56 des Nebenlagers 25 in eine Nut in der äußeren Mantelfläche des Endstückes 8 des Evakuierungsrohres 7 eingreifen, so muß das Evakuierungsrohr noch mit einer Dehnungsvorrichtung versehen sein, um die axiale Schrumpfung dieses Rohres bei einer Abkühlung ausgleichen zu können. Im Ausführungsbeispiel der Figur ist jedoch angenommen, daß sich das Rohr 7 relativ zur Lagerschale 56 des Nebenlagers 25 axial verschieben kann.

Das Anschlußkopfteil 2 muß außerdem gegen ein Verdrehen in Umfangsrichtung um das Wellenendstück 3 gesichert sein. Hierzu können beispielsweise elastische, in der Figur nicht näher ausgeführte Zwischenglieder zwischen dem feststehenden, den Läufer umgebenden Außengehäuse der Maschine und dem Außengehäuse 20 des Anschlußkopfteiles 2 vorgesehen sein. In der Figur ist nur das Ende eines solchen Zwischengliedes durch gestrichelte Linien 58 angedeutet. Diese Zwischenglieder, mit denen auch eine axiale Fixierung des Anschlußkopfteiles 2 möglich ist, können auch als vakuumdichter Mantel um den äußeren Hohlzylinder 6 des Wellenendstückes 3

0009196

gestaltet sein, falls in dem Raum 54 ein Isoliervakuum herrschen soll.

Die in der Zeichnung mit 2 bezeichneten Bauteile
stellen im allgemeinen nur einen Teil eines Anschlußkopfes dar. Wesentlich für diese Teile ist
jedoch, daß sie die radialen Auslenkungen des
Wellenendstückes 3 mitvollziehen. Sie können auch
über elastische Zwischenglieder mit weiteren, ortsfesten Bauteilen eines Anschlußkopfes, die starr
an dem Maschinengehäuse befestigt sind, verbunden
sein.

14 Patentansprüche
1 Figur

0009196

Patentansprüche

1. Elektrische Maschine mit einem Läufer, der in einem ortsfesten Maschinengehäuse drehbar gelagert ist und eine tiefzukühlende, supraleitende Erregerwicklung enthält und dessen Läuferkörper an einer Seite als zylindrisches Wellenendstück gestaltet ist, um das ein nicht-rotierendes Teil eines Anschlußkopfes angeordnet ist, wobei zwischen dem Wellenendstück und dem Anschlußkopfteil mindestens ein Lager und mindestens eine Dichtungsvorrichtung vorgesehen sind und eine Überleitung eines Kühlmittels erfolgt, d a d u r c h   g e k e n n - z e i c h n e t ,  daß ein Lager (22; 25) mit so geringem radialen Spiel vorgesehen ist, daß das Anschlußkopfteil (2) den radialen Auslenkungen des Wellenendstückes (3) aus dessen Sollage bezüglich einer Rotationsachse (4) folgt.

2. Elektrische Maschine nach Anspruch 1,  d a - d u r c h   g e k e n n z e i c h n e t ,  daß das Lager (22; 25) ein Gleitlager ist.

3. Elektrische Maschine nach Anspruch 1 oder 2, - d a - d u r c h   g e k e n n z e i c h n e t ,  daß mit dem Lager (22) eine Fixierung des Anschlußkopfteils (2) auf dem Wellenendstück (3) in axialer Richtung vorgesehen ist.

4. Elektrische Maschine nach einem der Ansprüche 1 bis 3,  d a d u r c h   g e k e n n z e i c h n e t ,  daß das Wellenendstück (3) ein äußeres und ein inneres hohlzylindrisches Bauteil (6 bzw. 7) enthält, die jeweils konzentrisch zu einem benachbarten, hohlzylindrischen Bauteil (20 bzw. 23) des Anschlußkopfteils (2) angeordnet sind.

5. Elektrische Maschine nach Anspruch 4, d a - d u r c h g e k e n n z e i c h n e t , daß das innere hohlzylindrische Bauteil (7) des Wellenend- stücks (3) ein zentral angeordnetes Evakuierungsrohr ist.

6. Elektrische Maschine nach Anspruch 4 oder 5, d a d u r c h g e k e n n z e i c h n e t , daß zwischen den jeweils benachbarten Bauteilen (6, 20 bzw. 7, 23) des Wellenendstücks (3) und des Anschlußkopfteils (2) jeweils mindestens ein Lager (22 bzw. 25) angeordnet ist.

7. Elektrische Maschine nach einem der Ansprüche 4 bis 6, d a d u r c h g e k e n n z e i c h n e t , daß zwischen den jeweils benachbarten Bauteilen (6, 20 bzw. 7, 23) des Wellenendstücks (3) und des Anschlußkopfteils (2) jeweils mindestens eine Dichtungsvorrichtung (29 bzw. 30) angeordnet ist.

8. Elektrische Maschine nach einem der Ansprüche 1 bis 7, d a d u r c h g e k e n n z e i c h n e t , daß die Dichtungsvorrichtung (29; 30) mindestens eine Ferrofluidikdichtung (50 bis 52) ist.

9. Elektrische Maschine nach einem der Ansprüche 1 bis 8, d a d u r c h g e k e n n z e i c h n e t , daß das Wellenendstück (3) mit mindestens zwei Hohlräumen (16; 13, 14) mit ringförmigem Querschnitt zur Zuleitung des Kühlmittels (A) zu der Erregerwicklung und zur Rückleitung des Kühlmittels ($A_2$) versehen ist.

0009196

- 3 -    VPA 78 P 7 5 4 4 EUR

10. Elektrische Maschine nach Anspruch 9, d a - d u r c h  g e k e n n z e i c h n e t , daß der ringförmige Hohlraum (16) des Wellenendstücks (3) zur Zuleitung des Kühlmittels (A) zwischen zwei rohrförmigen Bauteilen (11, 12) angeordnet ist und in ihn das Ende einer Kühlmitteleinspeisungsleitung (32) mit ebenfalls ringförmigem Querschnitt hineinragt.

11. Elektrische Maschine nach Anspruch 10, d a - d u r c h  g e k e n n z e i c h n e t , daß die Einspeisungsleitung (32) gegenüber den rohrförmigen Bauteilen (11, 12) des Wellenendstücks (3) mittels Dichtungen (42, 43) abgedichtet ist.

12. Elektrische Maschine nach einem der Ansprüche 9 bis 11, d a d u r c h  g e k e n n z e i c h n e t , daß der ringförmige Hohlraum (13, 14) des Wellenendstücks (3) zur Rückleitung des Kühlmittels (A$_2$) mit einem Innenraum (27) innerhalb des Anschlußkopfteils (2) kühlmitteldicht verbunden ist.

13. Elektrische Maschine nach einem der Ansprüche 1 bis 12, d a d u r c h  g e k e n n z e i c h n e t , daß zwischen dem Anschlußkopf (2) und dem Maschinengehäuse elastische Zwischenglieder angeordnet sind.

14. Elektrische Maschine nach Anspruch 13, d a - d u r c h  g e k e n n z e i c h n e t , daß die elastischen Zwischenglieder Teil eines Vakuumgehäuses um das Wellenendstück (3) sind.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | CH - A - 510 349 (HITACHI) <br> * Spalte 4, Zeile 20 und folgende * <br> -- | 1,13 |
| | US - A - 4 056 745 (PH. W. ECKELS) <br> * Spalte 2, Zeile 32 und folgende * <br> -- | 1 |
| A | DE - B1 - 1 164 170 (GOETZEWERKE) <br> * gesamtes Dokument * <br> ---- | |

**KLASSIFIKATION DER ANMELDUNG (Int.Cl.3)**

H 02 K 9/19
F 16 C 17/26
F 16 L 27/08

**RECHERCHIERTE SACHGEBIETE (Int. Cl.3)**

F 16 C 17/26
F 16 L 27/08
H 02 K 9/19
H 02 K 19/16

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort <br> Berlin | Abschlußdatum der Recherche <br> 26-11-1979 | Prüfer <br> GESSNER |
|---|---|---|

EPA form 1503.1  06.78